# EUROPEAN PATENT APPLICATION

(11) **EP 3 006 269 A1**
(43) Date of publication of application: **13.04.2016**
(21) Application number: 15173546.1
(22) Date of filing: 24.06.2015
(51) Int. Cl.: B60R 13/02

(54) **GARNISH ASSEMBLY FOR VEHICLE**

(30) Priority: 10.10.2014 KR 20140136813
(71) Applicant: Hanil E-Hwa Co., Ltd., Seoul 135-750 (KR)
(72) Inventor: Kim, Ki Ho, 336-050 Chungcheongnam-do (KR)
(74) Representative: Zinkler, Franz

(57) **Abstract**

Disclosed herein is a garnish assembly for a vehicle, including a garnish panel made of a transparent material such that an image displayed on a display panel penetrates the garnish panel to be shown in an interior of the vehicle, a display panel for displaying an image by an electric image signal, and a display driving unit outputting a drive signal to drive the display panel. Accordingly, it is possible to realize various colors and patterns, and to increase overall brightness in the vehicle interior and simply adjust brightness at user's desire by utilizing a whole surface of a garnish.

## Description

### CROSS-REFERENCE(S) TO RELATED APPLICATIONS

This application claims priority to Korean Patent Application No. 10-2014-0136813, filed on October 10, 2014, the disclosure of which is incorporated herein by reference in its entirety.

### BACKGROUND OF THE INVENTION

### Field of the Invention

Exemplary embodiments of the present invention relate to a garnish assembly for a vehicle, and more particularly, to a garnish assembly which is mainly mounted to a crash pad or a door trim for interior decoration of a vehicle.

### Description of the Related Art

In general, vehicles have various types of lamps in the exterior and interior thereof since the vehicles have to be driven in daytime and at night.

Vehicle interior designs as well as drive devices such as engines are gentrified to realize high qualities of vehicles. A garnish is one type of vehicle interior decorations. The garnish is one of decorative parts mounted to instrument panels or trims, and has a wood grain film or a painted surface.

A variety of more lamps are provided in the interior of vehicles in which passengers directly get, compared to in the exterior thereof. Such lamps may be classified into lighting lamps for reading and functional lamps such as dashboard lighting and switch lighting according to purposes. In particular, interior lighting to emit light of various colors is installed to a crash pad or a door trim or is separately provided, in order to create a delicate atmosphere in the vehicle interior at night.

In recent years, a garnish is developed in which various colored indirect mood lighting effects are exhibited at an edge of the garnish.

However, a lighting device having such a conventional garnish has a limit in that the lighting effects may be exhibited at the limited edge of the garnish and may not be exhibited on a surface of the garnish. That is, since a typical film is attached on the surface of the garnish or the surface of the garnish is treated by high glossy, the lighting effects are not exhibited on the surface of the garnish and are exhibited at only a portion of the edge of the garnish at night. For this reason, various mood lighting effects may not be created.

Meanwhile, a technology in which a lighting device is provided in the inside of a conventional garnish is disclosed. In this case, interior brightness may be increased, but various patterns or colors may not be realized.

### SUMMARY OF THE INVENTION

The present invention has been made in view of the above-mentioned problems, and an object thereof is to provide a garnish assembly for a vehicle, capable of realizing various colors and patterns and increasing overall brightness in a vehicle interior.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with one aspect of the present invention, a garnish assembly for a vehicle includes a garnish panel provided on an interior side wall of a vehicle and made of a transparent material such that an image displayed on a display panel penetrates the garnish panel to be shown in an interior of the vehicle, a display panel provided behind the garnish panel to display an image by an electric image signal, and a display driving unit outputting a drive signal to drive the display panel.

In the garnish assembly, the display driving unit may output a drive signal such that an image is changed and displayed at a predetermined time interval on the display panel.

In the garnish assembly, the display driving unit may output a drive signal to adjust brightness of the display panel.

In the garnish assembly, the display driving unit may output a drive signal such that the display panel displays a preset image when power of the vehicle is started.

The garnish assembly may further include an input unit for applying a control signal to the display driving unit by a user operation.

The garnish panel may be colored.

The garnish panel may have a high glossy surface.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a side view illustrating a garnish assembly for a vehicle according to an embodiment of the present invention;
Fig. 2 is a side cross-sectional view taken alone line "A-A" in Fig. 1; and
Fig. 3 is a side view illustrating an operation state of the garnish assembly for a vehicle illustrated in Fig. 1.

### DESCRIPTION OF SPECIFIC EMBODIMENTS

Exemplary embodiments of the present invention will be described below in more detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention. The drawings are not necessarily to scale and in some instances, proportions may have been exaggerated in order to clearly illustrate features of the embodiments.

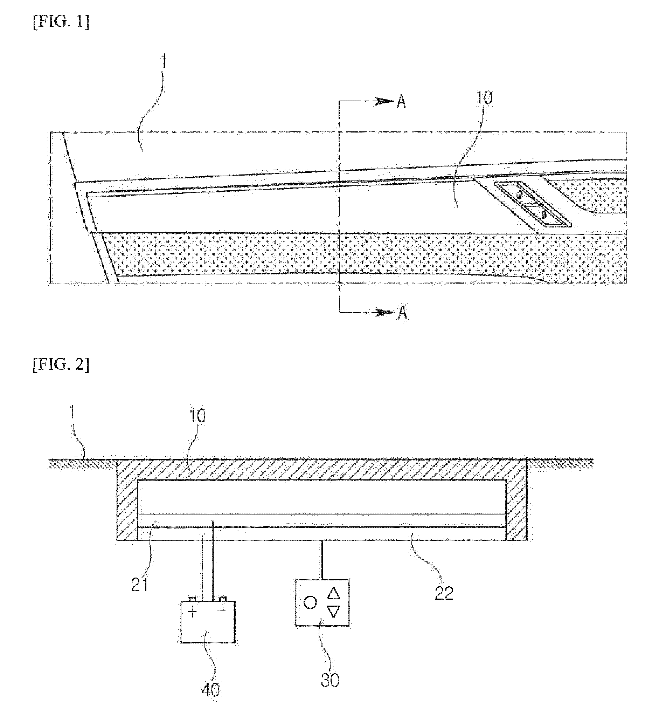

Referring to Figs. 1 to 3, a garnish assembly for a vehicle according to an embodiment of the present invention includes a garnish panel 10 made of a transparent material such that an image displayed on a display panel may penetrate the garnish panel 10 to be shown in an interior of a vehicle, a display panel 21 for displaying an image by an electric image signal, a display driving unit 22 for outputting a drive signal to drive the display panel 21, and an input unit 30 for applying a control signal to the display driving unit 22 by a user operation.

The garnish panel 10 is provided on an interior side wall 1 of the vehicle and the display panel 21 is provided behind the garnish panel 10. The garnish panel 10 is exposed to the interior of the vehicle, whereas the display panel 21 is located inside the vehicle since being installed behind the garnish panel 10.

The garnish panel 10 and the display panel 21 have the same shape and are in parallel with each other. Accordingly, the image on the display panel 21 is shown in the entirety of the garnish panel 10.

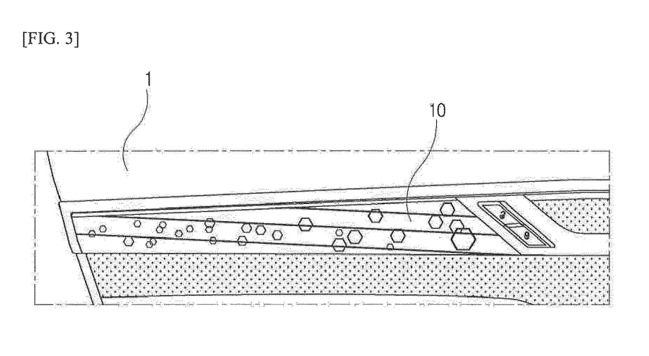

The garnish panel 10 is made of a transparent material and thus the displayed image penetrates the garnish panel 10 and is shown to the outside when the display panel 21 is operated. In addition, the garnish panel 10 is colored and has a color when the display panel 21 is not operated. When the garnish panel 10 is made of a transparent black material, the garnish panel 10 has only a black color when the display panel 21 is not operated (OFF) and the garnish panel 10 has a displayed color when the display panel 21 is operated (ON). Fig. 3 illustrates a state in which the display panel 21 is operated, and a state in which the image is displayed on the display panel 21 and is shown to the outside through the garnish panel 10.

The garnish panel 10 has a high glossy surface. High glossy is a technique of preventing surface contamination and scratches and realizing gloss in various forms. The high glossy surface is typically formed by coating and hardening an ultraviolet hardening resin. Since this technique is typically applied to the conventional garnish, detailed description thereof will be omitted.

The display panel 21 may be one of a TFT, an LCD, an LED, and an OLED. Besides, all image outputting devices capable of displaying flat images may be, of course, applied to the present invention.

A liquid crystal panel, a plasma panel, or the like may be used as the display panel 21 according to characteristics thereof. When a liquid crystal panel capable of generating no light by itself is used as the display panel 21, a backlight unit (not shown) for generating light and supplying the light to the display panel 21 is provided. In the liquid crystal panel, an array of liquid crystal layers is adjusted in a pixel unit according to a drive signal of the display driving unit 22 applied thereto, thereby allowing an image to be changed and displayed.

The display driving unit 22 stores information of a plurality of various images and applies an image information signal preset according to an input mode from the input unit 30 to the display panel 21.

The image information stored in the display driving unit 22 includes a simple graphic or pattern, a symbol, an actual picture, etc., and also includes general video information. Accordingly, an interior atmosphere may be created by displaying a video through the display panel 21.

The display driving unit 22 may apply a drive signal to the display panel 21 in order to change and output information of a plurality of images at a predetermined time interval. That is, the display driving unit 22 stores execution information to output a drive signal such that various images are changed and displayed at a predetermined time interval on the display panel 21. The input unit 30 includes an input mode in the form of button or touch panel for selecting the execution information and applying the same to the display panel 21.

The display driving unit 22 may output a drive signal to adjust brightness of the display panel 21. The input unit 30 includes an input mode in the form of button or touch panel for brightness adjustment.

The display driving unit 22 may output a drive signal such that the display panel 21 displays a preset image when power of the vehicle is started. Here, the display panel 21 and the display driving unit 22 are operated by power supplied from a power supply unit 40. The power supply unit 40 may use power of the vehicle or may be separately provided.

When a driver turns on an ignition of the vehicle, namely, when a tail lamp is turned on in other electronic devices including a cluster, the display driving unit 22 outputs a drive signal about preset image information to the display panel 21 so that a specific image is displayed on the display panel 21.

As is apparent from the above description, in accordance with a garnish assembly for a vehicle according to exemplary embodiments of the present invention, it is possible to realize various colors and patterns, and to increase overall brightness in a vehicle interior and simply adjust brightness at user's desire by utilizing a whole surface of a garnish.

While the present invention has been described with respect to the specific embodiments, it will be apparent to those skilled in the art that various changes and modifications may be made without departing from the spirit and scope of the invention as defined in the following claims.

## Claims

1. A garnish assembly for a vehicle, comprising:
a garnish panel provided on an interior side wall of a vehicle and made of a transparent material such that an image displayed on a display panel penetrates the garnish panel to be shown in an interior of the vehicle;
a display panel provided behind the garnish panel to display an image by an electric image signal; and
a display driving unit outputting a drive signal to drive the display panel.

2. The garnish assembly according to claim 1, wherein the display driving unit outputs a drive signal such that an image is changed and displayed at a predetermined time interval on the display panel.

3. The garnish assembly according to claim 1, wherein the display driving unit outputs a drive signal to adjust brightness of the display panel.

4. The garnish assembly according to claim 1, wherein the display driving unit outputs a drive signal such that the display panel displays a preset image when power of the vehicle is started.

5. The garnish assembly according to claim 1, further comprising an input unit for applying a control signal to the display driving unit by a user operation.

6. The garnish assembly according to claim 1, wherein the garnish panel is colored.

7. The garnish assembly according to claim 1, wherein the garnish panel has a high glossy surface.
